# FASCICULE DE BREVET EUROPEEN

(11) **EP 1 599 361 B1**
(45) Date de publication et mention de la délivrance du brevet: **13.05.2009**
(21) Numéro de dépôt: 04717131.9
(22) Date de dépôt: 04.03.2004
(51) Int. Cl.: B60R 7/04

(54) **ENSEMBLE POUR VEHICULE AUTOMOBILE COMPRENANT UNE BASE ET UNE CONSOLE MOBILE PAR COULISSEMENT ET EXTRACTIBLE PAR RAPPORT A LA BASE**
KRAFTFAHRZEUGEINHEIT MIT EINER BASIS UND EINER VERSCHIEBAREN UND AUS DER BASIS HERAUSZIEHBAREN KONSOLE
UNIT FOR A MOTOR VEHICLE COMPRISING A BASE AND A CONSOLE WHICH IS SLIDEABLE AND EXTRACTABLE IN RELATION TO THE BASE

(30) Priorité: 05.03.2003 FR 0302723
(43) Date de publication de la demande: 30.11.2005
(73) Titulaire: Faurecia Interieur Industrie, 92000 Nanterre (FR)
(72) Inventeur: BRANCHERIAU, Christian, F-95220 Herblay (FR); DUCHEZ, David, F-78770 Andelu (FR)
(74) Mandataire: Domenego, Bertrand
(86) Numéro de dépôt international: PCT/FR2004/000514
(87) Numéro de publication internationale: WO 2004/080759

(56) Documents cités:
- EP-A- 1 197 382
- EP-A- 1 245 446
- FR-A- 2 781 731
- US-A- 2 095 442
- US-A- 4 114 947
- US-A- 4 213 593

## Description

La présente invention concerne un ensemble pour véhicule automobile, du type comprenant une base, une console mobile par coulissement par rapport à la base le long d'une direction de coulissement, et des moyens de liaison de la console à la base, les moyens de liaison comprenant au moins un élément de blocage mobile entre une position de blocage, dans laquelle la console est bloquée par rapport à la base le long de la direction de coulissement et l'élément de blocage retient la console par rapport à la base contre une extraction, et une position de coulissement, dans laquelle la console peut coulisser par rapport à la base le long de la direction de coulissement, les moyens de liaison permettant en outre de libérer la console de la base pour l'extraire du véhicule automobile.

L'invention s'applique en particulier à un ensemble central de console prévu entre des sièges droits et gauches d'un véhicule automobile.

EP-1 245 446 décrit une console dont les moyens de liaison à la base permettent de bloquer ou de faire coulisser la console, ainsi que de l'extraire du véhicule. Ces moyens de liaison comprennent deux tiges et un patin. Pour pouvoir extraire la console, on fait pivoter le patin pour lui permettre de passer au travers d'un dégagement prévu dans la base.

Ce document décrit également un ensemble pour véhicule automobile, comprenant une base, une console mobile par coulissement par rapport à la base le long d'une direction de coulissement, et des moyens de liaison de la console à la base pour permettre le réglage de la position de la console le long de la direction de coulissement sur une course de réglage, les moyens de liaison comprenant deux tiges mobiles entre une position de blocage, dans laquelle la console est bloquée par rapport à la base le long de la direction de coulissement et une position de coulissement, dans laquelle la console peut coulisser par rapport à la base le long de la direction de coulissement, les moyens de liaison permettant en outre de libérer la console de la base pour l'extraire du véhicule automobile, ladite base comprenant une région d'extraction dans laquelle un dégagement est prévu, ladite région d'extraction étant située hors de la course de réglage, et lesdites tiges en position de blocage pouvant passer au travers du dégagement afin d'extraire la console du véhicule automobile.

US-4 213 593 et US-4 114 947 décrivent des moyens de liaison de sièges à des châssis permettant d'autoriser ou de bloquer un coulissement longitudinal des sièges et permettant en outre d'extraire les sièges par rapport au châssis.

FR-2 762 811 décrit un ensemble du type précité. La base comprends une glissière solidaire du plancher du véhicule. Les moyens de liaison comprennent deux crochets formant des éléments de blocage. En position de blocage, les crochets sont engagés dans des encoches réparties le long des bords de la glissière. En position de coulissement, ils sont rétractés et dégagés des encoches.

Les moyens de liaison comprennent également des biellettes articulées pour déplacer les crochets entre leurs positions de blocage et leurs positions de coulissement. En outre, les biellettes permettent de déplacer les crochets vers des troisièmes positions dans lesquelles les crochets sont suffisamment rétractés pour permettre leur passage au travers d'une fente centrale de la glissière.

Ainsi, la console peut être extraite du véhicule automobile, ce qui permet de moduler l'aménagement intérieur et, par exemple, de libérer de la place à l'intérieur de l'habitacle.

Toutefois, les moyens de liaison de la console à la base décrits dans ce document nécessitent de prévoir dans la console un mécanisme à biellettes particulièrement complexe et coûteux pour déplacer les éléments de blocage.

Un but de l'invention est de résoudre ce problème en fournissant un ensemble du type précité, dont la console puisse coulisser et être bloquée le long de la base et être libérée de la base pour l'extraire du véhicule automobile, mais qui soit plus simple et de coût plus réduit et où les risques d'extraction accidentelle sont réduits.

A cet effet, l'invention a pour objet un ensemble du type précité, caractérisé en ce que la base comprend une région d'extraction dans laquelle un dégagement est prévu, et en ce que l'élément de blocage en position de blocage peut passer au travers du dégagement afin d'extraire la console du véhicule automobile.

Selon des modes particuliers de réalisation, l'ensemble peut comprendre l'une ou plusieurs des caractéristiques suivantes, prise(s) isolément ou selon toutes les combinaisons techniquement possibles :
- la base comprend des moyens de guidage de la console par rapport à la base,
- les moyens de guidage comprennent des moyens de roulement,
- l'élément de blocage est un crochet qui, en position de blocage, est engagé sous un bord de la base pour retenir la console contre une extraction, et en ce que le dégagement est ménagé dans le bord de la base,
- la base comprend une butée de contrôle de l'accès de la console à la région d'extraction,
- la butée de contrôle est mobile entre une position extraite empêchant le coulissement de la console vers la région d'extraction, et une position rétractée autorisant le coulissement de la console vers la région d'extraction,
- la console comprend un doigt mobile entre une position d'appui contre la butée pour empêcher le coulissement de la console vers la région d'extraction, et une position de passage de la butée pour permettre le coulissement de la console vers la région d'extraction,
- la console comprend des moyens de déplacement des moyens de liaison, et
- la région d'extraction est une région de fin de course de la console par rapport à la base.

L'invention a en outre pour objet un véhicule automobile, caractérisé en ce qu'il comprend un ensemble tel que défini précédemment.

L'invention sera mieux comprise à la suite de la description qui va suivre, donnée uniquement à titre d'exemple, et faite en se référant aux dessins annexés, sur lesquels :
- la figure 1 est une vue partielle, schématique et en perspective de l'habitacle d'un véhicule automobile selon l'invention,
- la figure 2 est une vue schématique de dessus de l'ensemble console/base du véhicule de la figure 1,
- la figure 3 est une vue schématique en coupe prise suivant la ligne III-III de la figure 2,
- la figure 4 est une vue schématique agrandie de la partie IV de la figure 3, illustrant l'élément de blocage de la console en position de blocage,
- la figure 5 est une vue analogue à la figure 4 illustrant l'élément de blocage en position de coulissement,
- les figures 6 et 7 sont des vues analogues à la figure 2 illustrant l'extraction de la console, et
- les figures 8 et 9 sont des vues analogues aux figures 6 et 7 illustrant une variante de l'invention.

Dans tout ce qui suit, les orientations utilisées sont les orientations habituelles d'un véhicule automobile. En particulier, les termes « avant », « arrière », « droite » et « gauche » s'entendent par rapport à la position d'un conducteur et au sens de marche du véhicule automobile.

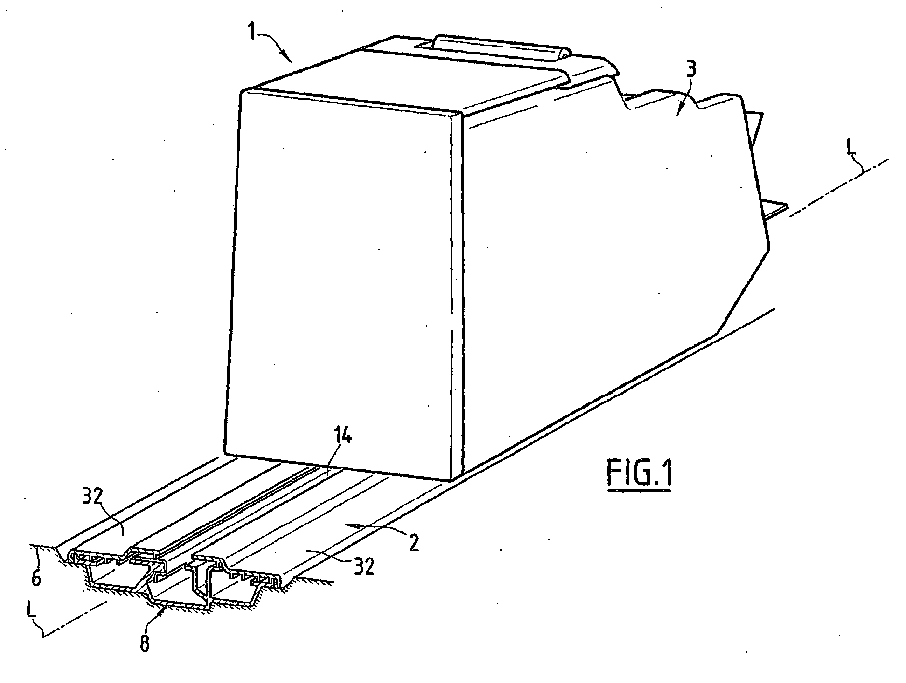

La figure 1 illustre schématiquement l'habitacle d'un véhicule automobile. On y distingue un ensemble 1 comprenant une base 2 et une console 3 mobile par coulissement par rapport à la base 2 le long d'une direction de coulissement L.

L'ensemble 1 est disposé entre les sièges (non-représentés) avant droit et gauche du véhicule automobile et la direction de coulissement L est sensiblement confondue avec la direction longitudinale du véhicule automobile.

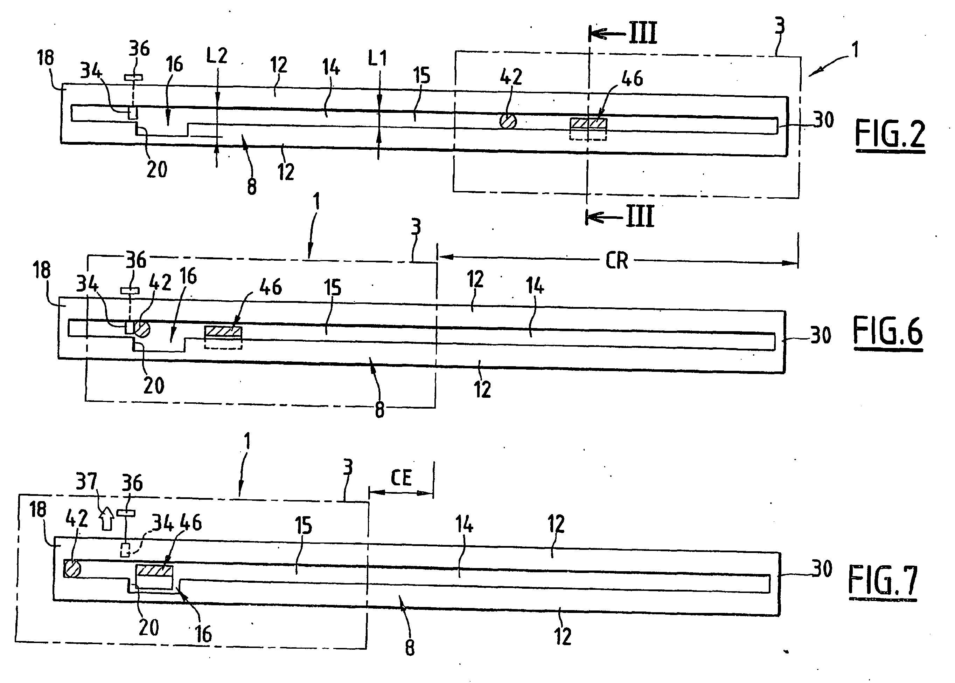

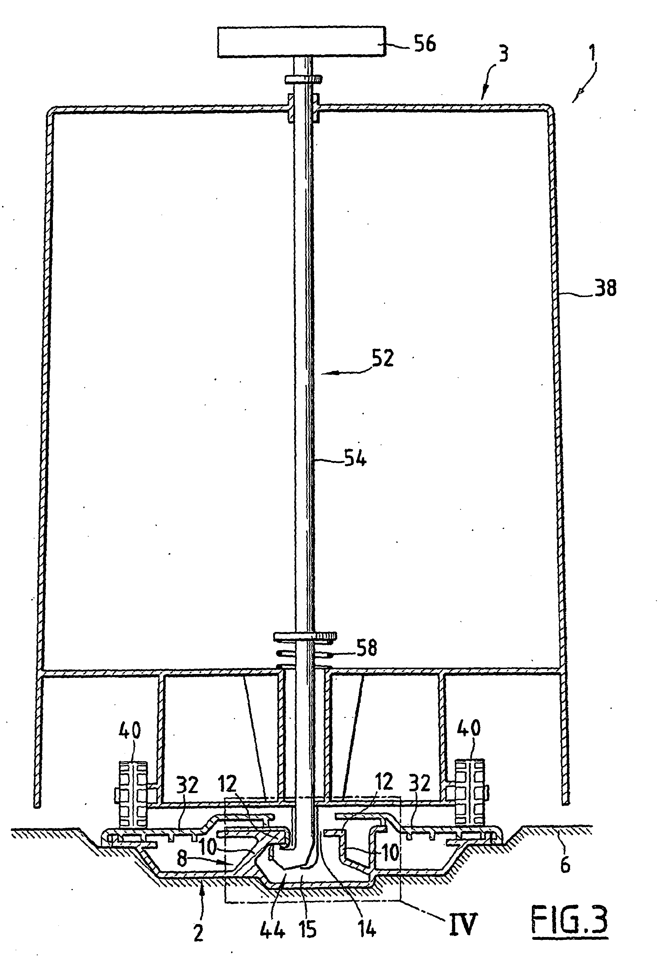

Comme illustré par les figures 2 et 3, la base 2 est solidaire du plancher 6 du véhicule automobile et comprend une glissière 8 qui est réalisée par exemple à partir d'un profilé d'aluminium et qui s'étend longitudinalement. La console 3 a été représentée en traits mixtes sur la figure 2.

La glissière 8 comprend deux ailes latérales 10 dont des bords 12 disposés en regard délimitent entre eux une fente centrale 14 s'étendant sur toute la longueur de la glissière 8. Les ailes latérales 10 délimitent entre elles un passage longitudinal 15 qui débouche vers le haut via la fente 14 dans l'habitacle.

La fente centrale 14 a une largeur sensiblement constante L1 sauf dans une région d'extraction 16 proche de son extrémité arrière 18.

Dans la région d'extraction 16, la fente 14 est élargie par un dégagement d'extraction 20 prévu dans le bord 12 droit. Ainsi, la fente 14 a localement une largeur L2 supérieure à L1.

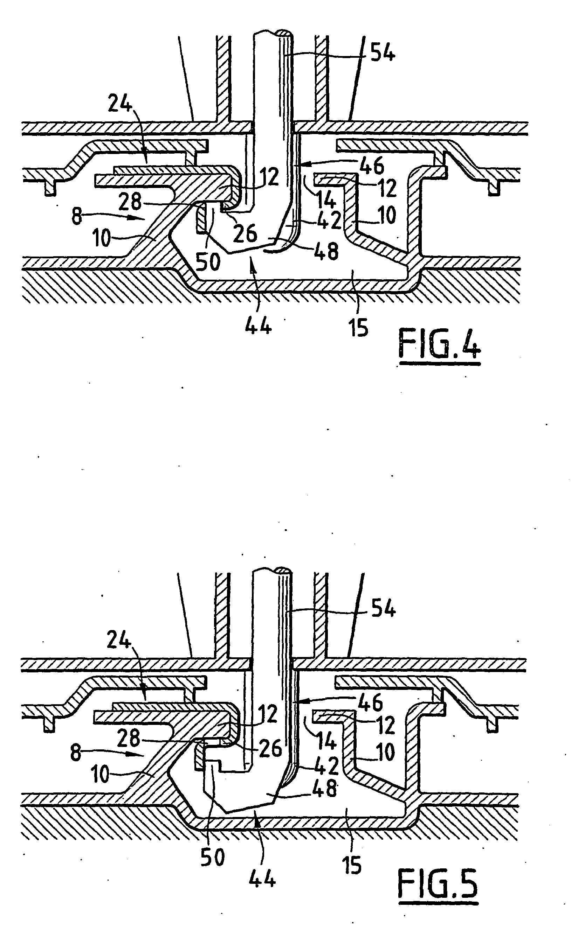

Le bord 12 droit (à gauche sur les figures 3 et 4) est enveloppé d'une tôle pliée 24 dont le tronçon 26 disposé dans le passage 15 sous le bord 12 droit présente des encoches 28 régulièrement réparties sur la longueur de la tôle 24. Cette tôle 24 s'étend depuis la région d'extraction 16 vers l'extrémité avant 30 de la glissière 8 pour permettre le réglage de la position longitudinale de la console 3 le long d'une course de réglage CR (fig.6), comme cela sera décrit par la suite.

La base 2 comprend en outre deux enjoliveurs 32 (fig.3) qui sont disposés de part et d'autre de la fente 14 et recouvrent la glissière 8.

Derrière la région d'extraction 16, la base 2 comprend une butée 34 disposée dans le passage 15 et mobile sous l'action d'une tirette 36 entre une position extraite illustrée par la figure 2, dans laquelle la butée 34 s'avance latéralement vers la droite sous la fente 14, et une position rétractée illustrée par la figure 7, dans laquelle la butée 34 a reculé vers la gauche et ne s'avance plus sous la fente 14.

Le déplacement de la butée 34 entre sa position extraite et sa position rétractée est assuré, dans l'exemple représenté, par traction de la tirette 36 vers la gauche comme matérialisé par la flèche 37. Un organe de rappel tel qu'un ressort peut, par exemple ramener la butée 34 vers sa position extraite.

Comme illustré par la figure 3, la console 3 comprend de manière classique un corps 38 offrant plusieurs boîtiers et logements de réception d'objets. La console 3 comprend également par exemple des galets 40 prévus sous le corps 38 pour rouler sur la base 2. Dans l'exemple représenté sur la figure 3, la console 3 comprend quatre galets 40 dont deux sont destinés à rouler sur l'enjoliveur 32 droit et deux autres sont destinés à rouler sur l'enjoliveur 32 gauche.

Dans d'autres variantes non-représentées, les galets 40 peuvent être remplacés par des patins de glissement.

Le guidage du coulissement de la console 3 par rapport à la base 2 est assuré, en plus des galets 40, par un doigt 42 qui fait saillie vers le bas depuis la paroi inférieure du corps 38. Ce doigt 42, qui est visible sur la figure 4, s'étend vers le bas au travers de la fente 14 jusque dans le passage 15.

Grâce aux galets 30 et au doigt 42, la console 3 est guidée le long de la glissière 8 lors de son coulissement et maintenue latéralement par rapport à celle-ci.

La console 3 comprend en outre des moyens 44 de liaison de la console 3 à la base 2.

Comme illustré par les figures 3 et 4, ces moyens 44 de liaison comprennent un élément de blocage sous forme d'un crochet 46 prévu sous le corps 38 de la console 3. Le crochet 46 s'étend vers le bas au travers de la fente 14 et comprend, dans le passage 15, un rebroussement 48 terminé par une griffe 50 orientée vers le haut. Le crochet 46 est disposé devant le doigt de guidage 42. Le crochet 46 a une largeur inférieure à L2 mais supérieure à L1, et une longueur inférieure à celle du dégagement 20.

Le crochet 46 est mobile entre :
- une première position soulevée (figure 4) dans laquelle la griffe 50 est engagée dans une encoche 28 de la tôle 24, et
- une deuxième position abaissée (figure 5) dans laquelle la griffe 50 est dégagée de toute encoche 28.

La translation verticale du crochet 46 entre ses deux positions est assurée par des moyens 52 de déplacement. Dans l'exemple représenté ces moyens 52 de déplacement comprennent une tige 54 qui s'étend au travers du corps 38. La tige 54 est prolongée à son extrémité inférieure par le crochet 46. L'extrémité supérieure de la tige 54 est reliée à une poignée 56 disposée au-dessus du corps 38. Pour déplacer le crochet 46 vers sa position abaissée, on pousse la poignée 56 vers le bas. Un ressort 58 rappelle la tige 54 vers le haut. Ainsi, il suffit de ne plus agir sur la poignée 56 pour que le crochet 46 revienne vers sa position soulevée.

Dans d'autres variantes, les moyens 52 de déplacement peuvent avoir des structures différentes et comprendre un mécanisme à biellettes, à tringles, à cames, à câbles ou à leviers, par exemple commandé par une poignée portée par la face supérieure de la console 3.

Il peut également s'agir d'un mécanisme tel que celui décrit dans les documents EP-925 996 ou la demande de brevet publiée sous le numéro FR-2 829 439.

Le crochet 46 n'ayant qu'à se déplacer verticalement entre deux positions, le mécanisme de ces deux derniers documents peut être considérablement simplifié. Dans encore une autre variante, on peut utiliser des moyens électriques 52 de déplacement.

Lorsque le crochet 46 est dans sa position soulevée (figure 4), il bloque longitudinalement la console 3 par rapport à la base 2 du fait de l'engagement de la griffe 50 dans une encoche 28. Si l'on souhaite déplacer longitudinalement la console 3, on commande le déplacement du crochet 46 vers sa position abaissée (fig.5).

La griffe 50 étant dégagée des encoches 28, la console 3 peut alors coulisser par rapport à la base 2 entre une position avant de fin de course de réglage, illustrée par la figure 2, et une position reculée illustrée par la figure 6.

Dans cette position reculée, le doigt 42 est en appui contre la butée 34. La console 3 ne peut donc pas reculer au delà de cette position.

Lorsque la console 3 occupe une position souhaitée le long de la course de réglage CR, on ramène le crochet 46 vers sa position soulevée de blocage, et la griffe 50 s'engage alors dans le cran 28 prévu à cet emplacement. La console 3 est alors bloquée longitudinalement dans la position souhaitée par rapport à la base 2.

Les moyens 44 de liaison permettent donc d'assurer un coulissement et un blocage longitudinal de la console 3. De plus, le crochet 46 qui est engagé sous le bord 12 droit s'oppose à un déplacement vertical de la console 3 par rapport à la base 2 et empêche ainsi toute extraction de la console 3 lorsqu'elle se situe dans la course de réglage CR. Cela est vrai aussi bien lorsque le crochet 46 est en position de blocage qu'en position de coulissement.

Pour extraire la console 3, on amène la butée 34 dans sa position rétractée ce qui libère l'accès vers l'extrémité arrière 18 de la glissière 8. La console 3 peut alors coulisser le long d'une course d'extraction CE (fig.7) jusqu'à ce que le doigt 42 vienne en butée contre l'extrémité arrière 18 de la glissière 8.

La console 3 est alors dans la position illustrée par la figure 7 qui est une position de fin de course d'extraction CE.

Dans cette position, la griffe 50 du crochet 46 est disposée sous le dégagement 20. Les dimensions du dégagement 20 sont suffisamment importantes pour qu'il ne s'oppose pas au passage du crochet 46, qu'il soit en position soulevée de blocage ou en position abaissée de coulissement.

Dans la position de la figure 7, il suffit donc de soulever la console 3 pour pouvoir l'extraire du véhicule automobile, le crochet 46 passant alors au travers du dégagement 20.

Les moyens 44 de liaison permettent donc également la libération de la console 3 par rapport à la base 2 et son extraction du véhicule automobile.

Pour autant, les moyens 52 de déplacement prévus dans la console 3 peuvent avoir une structure très simple et économique, puisqu'ils ne doivent assurer le déplacement du crochet 46 qu'entre deux positions sans avoir à assurer un déplacement vers une troisième position permettant l'extraction de la console 3, comme dans l'état de la technique.

L'extraction de la console 3 ne pouvant être assurée qu'après accès contrôlé à une région d'extraction 16 située hors de la course de réglage CR de la console 3, les risques d'extraction accidentelle de la console 3 sont réduits.

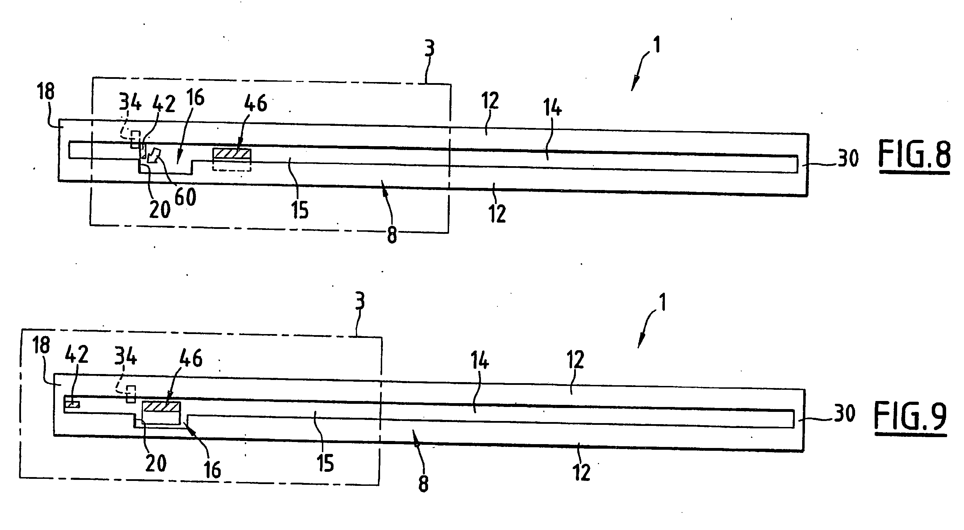

De manière plus générale, le contrôle de l'accès à la région d'extraction 16 peut être assuré grâce à une butée 34 fixe et un doigt 42 mobile, par exemple par rotation ou par translation. Une telle variante est illustrée par les figures 8 et 9.

Dans cette variante, le doigt 42 est entraîné en rotation d'un quart de tour pour pouvoir passer la butée 34, comme matérialisé par la flèche 60 sur la figure 8. Dans ce cas, le déplacement du doigt 42 peut être commandé par un mécanisme très simple, distinct des moyens 52 de déplacement du crochet 46. Il peut s'agir avantageusement d'une simple manette disposée au fond d'un logement de la console 3 et en prise directe avec le doigt 42. Ainsi, même dans cette variante, les moyens de déplacement présents dans la console 3 conservent des structures simples et économiques.

Dans une autre variante, la glissière 8 peut être remplacée par un rail dont les deux bords latéraux 12 présentent chacun des encoches 28 de blocage longitudinal de la console 3. Dans ce cas, la console 3 comporte deux crochets latéraux 46 qui viennent s'engager sous les bords latéraux du rail. Des dégagements permettant le passage des crochets 46 sont prévus dans les bords latéraux du rail pour permettre leur extraction selon les principes décrits précédemment.

On notera également que le blocage longitudinal de la console 3 par rapport à la base 2 peut être assuré par engagement de la griffe 50 dans une seule encoche 28, mais également par l'engagement de plusieurs saillies de la griffe 50 dans plusieurs encoches 28 successives.

## Revendications

1. Ensemble (1) pour véhicule automobile, comprenant une base (2), une console (3) mobile par coulissement par rapport à la base le long d'une direction de.coulissement (L), et des moyens (44) de liaison de la console à la base pour permettre le réglage de la position de la console (3) le long de la direction de coulissement sur une course de réglage (CR), les moyens de liaison comprenant au moins un élément de blocage (46) mobile entre une position de blocage (fig.4), dans laquelle la console est bloquée par rapport à la base le long de la direction de coulissement et l'élément de blocage retient la console (3) par rapport à la base (2) contre une extraction, et une position de coulissement (fig.5), dans laquelle la console (3) peut coulisser par rapport à la base le long de la direction de coulissement, les moyens (44) de liaison permettant en outre de libérer la console de la base pour l'extraire du véhicule automobile, la base comprenant une région d'extraction (16) dans laquelle un dégagement (20) est prévu, la région d'extraction (16) étant située hors de la course de réglage (CR), et l'élément de blocage (46) en position de blocage pouvant passer au travers du dégagement (20) afin d'extraire la console du véhicule automobile.

2. Ensemble selon la revendication 1, dans lequel la base (2) comprend des moyens (40, 42) de guidage de la console (3) par rapport à la base (2).

3. Ensemble selon la revendication 2, dans lequel les moyens de guidage comprennent des moyens (40) de roulement.

4. Ensemble selon la revendication 2 ou 3, dans lequel l'élément de blocage est un crochet (46) qui, en position de blocage, est engagé sous un bord (12) de la base (2) pour retenir la console (3) contre une extraction, et dans lequel le dégagement (20) est ménagé dans le bord (12) de la base (2).

5. Ensemble selon l'une des revendications précédentes, dans lequel la base (2) comprend une butée (34) de contrôle de l'accès de la console (3) à la région d'extraction (16).

6. Ensemble selon la revendication 5, dans lequel la butée de contrôle (34) est mobile entre une position extraite (fig.2) empêchant le coulissement de la console vers la région d'extraction (16), et une position rétractée (fig.7) autorisant le coulissement de la console (3) vers la région d'extraction (16).

7. Ensemble selon la revendication 5, dans lequel la console (3) comprend un doigt (42) mobile entre une position (fig.8) d'appui contre la butée (34) pour empêcher le coulissement de la console vers la région d'extraction (16), et une position (fig.9) de passage de la butée (34) pour permettre le coulissement de la console (3) vers la région d'extraction (16).

8. Ensemble selon l'une des revendications précédentes, dans lequel la console (3) comprend des moyens (52) de déplacement des moyens (44) de liaison.

9. Ensemble selon l'une des revendications précédentes, dans lequel la région d'extraction (16) est une région de fin de course de la console (3) par rapport à la base (2).

10. Véhicule automobile, **caractérisé en ce qu'**il comprend un ensemble selon l'une des revendications précédentes.

## Claims

1. Assembly (1) for a motor vehicle, comprising a base (2), a console (3) which is slidingly movable relative to the base in a sliding direction (L) and means (44) for connecting the console to the base to allow the position of the console (3) to be adjusted in the sliding direction on an adjustment path (CR), the connection means comprising at least a locking element (46) which is movable between a locking position (Fig. 4), in which the console is locked relative to the base in the sliding direction and the locking element retains the console (3) relative to the base (2) to prevent removal, and a sliding position (Fig. 5), in which the console (3) can slide relative to the base in the sliding direction, the connection means (44) further allowing the console to be released from the base in order to remove it from the motor vehicle, the base comprising a removal region (16) wherein a hole (20) is provided, the removal region (16) being located outside the adjustment path (CR) and the locking element (46) in the locking position being able to pass through the hole (20) in order to remove the console from the motor vehicle.

2. Assembly according to Claim 1, in which the base (2) comprises means (40, 42) for guiding the console (3) relative to the base (2).

3. Assembly according to Claim 2, in which the guiding means comprise roller means (40).

4. Assembly according to Claim 2 or 3, in which the locking element is a hook (46) which, in the locking position, is engaged under an edge (12) of the base (2) to retain the console (3) to prevent removal, and in which the hole (20) is arranged in the edge (12) of the base (2).

5. Assembly according to any one of the preceding claims, in which the base (2) comprises a stop (34) for controlling access of the console (3) to the removal region (16).

6. Assembly according to Claim 5, in which the control stop (34) is movable between an extracted position (Fig. 2) which prevents the console from sliding towards the removal region (16) and a retracted position (Fig. 7) which allows the console (3) to slide towards the removal region (16).

7. Assembly according to Claim 5, in which the console (3) comprises a member (42) which is movable between a position (Fig. 8) which abuts against the stop (34) in order to prevent the console from sliding towards the removal region (16) and a position (Fig. 9) in which it travels past the stop (34) in order to allow the console (3) to slide towards the removal region (16).

8. Assembly according to any one of the preceding claims, in which the console (3) comprises means (52) for displacing the connection means (44).

9. Assembly according to any one of the preceding claims, in which the removal region (16) is a travel limit region of the console (3) relative to the base (2).

10. Motor vehicle, **characterized in that** it comprises an assembly according to any one of the preceding claims.

## Patentansprüche

1. Anordnung (1) für Kraftfahrzeug, eine Basis (2) umfassend, eine Konsole (3), die gleitend relativ zur Basis längs einer Gleitrichtung (L) bewegbar ist, und Mittel (44) zur Verbindung der Konsole mit der Basis, um die Einstellung der Stellung der Konsole (3) längs der Gleitrichtung über einen Einstellweg (CR) zu erlauben, wobei die Verbindungsmittel mindestens ein Verriegelungsteil (46) umfassen, das zwischen einer Verriegelungsstellung (Fig. 4), in der die Konsole mit der Basis in Gleitrichtung verriegelt ist und das Verriegelungsteil die Konsole (3) in der Basis (2) gegen eine Entnahme festhält, und einer Gleitstellung (Fig. 5), in der die Konsole (3) relativ zur Basis längs der Gleitrichtung gleiten kann, beweglich ist, wobei die Verbindungsmittel (44) außerdem erlauben, die Konsole von der Basis zu trennen, um sie aus dem Kraftfahrzeug zu nehmen, wobei die Basis einen Entnahmebereich (16) aufweist, in dem ein Freischnitt (20) vorgesehen ist, wobei sich der Entnahmebereich (16) außerhalb des Einstellweges (CR) befindet, und das Verriegelungsteil (46) in der Verriegelungsstellung durch den Freischnitt (20) hindurchtreten kann, um die Konsole aus dem Kraftfahrzeug zu nehmen.

2. Anordnung nach Patentanspruch 1, in der die Basis (2) Mittel (40, 42) zur Führung der Konsole (3) relativ zur Basis (2) aufweist.

3. Anordnung nach Patentanspruch 2, in der die Führungsmittel Wälzmittel (40) umfassen.

4. Anordnung nach Patentanspruch 2 oder 3, in der das Verriegelungsteil ein Haken (46) ist, der in der Verriegelungsstellung unter einen Rand (12) der Basis (2) greift, um die Konsole (3) gegen eine Entnahme festzuhalten, und in der der Freischnitt (20) im Rand (12) der Basis (2) ausgebildet ist.

5. Anordnung nach einem der vorangehenden Patentansprüche, in der die Basis (2) einen Anschlag (34) zum Kontrollieren des Eintritts der Konsole (3) in den Entnahmeabschnitt (16) aufweist.

6. Anordnung nach Patentanspruch 5, in der der Kontrollanschlag (34) zwischen einer ausgezogenen Stellung (Fig. 2), die das Gleiten der Konsole in den Entnahmeabschnitt (16) verhindert, und einer eingezogenen Stellung (Fig. 7), die das Gleiten der Konsole (3) in den Entnahmeabschnitt (16) zulässt, beweglich ist.

7. Anordnung nach Patentanspruch 5, in der die Konsole (3) einen Finger (42) aufweist, der zwischen einer Stellung (Fig. 8) des Anliegens am Anschlag (34) zur Verhinderung des Gleitens der Konsole in den Entnahmeabschnitt (16) und einer Stellung (Fig. 9) des Passierens des Anschlages (34) zum Ermöglichen des Gleitens der Konsole (3) in den Entnahmeabschnitt (16) beweglich ist.

8. Anordnung nach einem der vorangehenden Patentansprüche, in der die Konsole (3) Mittel (52) zum Versetzen der Verbindungsmittel (44) aufweist.

9. Anordnung nach einem der vorangehenden Patentansprüche, in der der Entnahmeabschnitt (16) ein Endabschnitt der Bewegung der Konsole (3) auf der Basis (2) ist.

10. Kraftfahrzeug, in der es eine Anordnung nach einem der vorangehenden Patentansprüche enthält.
